# FASCICULE DE BREVET EUROPEEN

(11) **EP 1 090 278 B1**
(45) Date de publication et mention de la délivrance du brevet: **11.01.2006**
(21) Numéro de dépôt: 99926547.3
(22) Date de dépôt: 25.06.1999
(51) Int. Cl.: G01M 19/00, G01N 25/72

(54) **BANC D'ESSAI DE FATIGUE THERMIQUE DE CULASSES DE MOTEURS A COMBUSTION, ET PROCEDES ASSOCIES**
TESTSTAND ZUR UNTERSUCHUNG DER THERMISCHEN ERMÜDUNG VON ZYLINDERKÖPFEN VON VERBRENNUNGSMOTOREN UND DAZUGEHÖRENDES VERFAHREN
THERMAL FATIGUE TEST STAND FOR COMBUSTION ENGINE CYLINDER HEADS, AND RELATED METHODS

(30) Priorité: 26.06.1998 FR 9808127
(43) Date de publication de la demande: 11.04.2001
(73) Titulaire: MONTUPET S.A., F-92110 Clichy (FR)
(72) Inventeur: MEYER, Philippe, F-60600 Ronquerolles (FR); GUIMBAL, Frédéric, F-60300 Senlis (FR); DUPAIN, Arnauld, F-36120 Etrechet (FR)
(74) Mandataire: Ahner, Francis
(86) Numéro de dépôt international: PCT/FR1999/001541
(87) Numéro de publication internationale: WO 2000/000807

(56) Documents cités:
- WO-A-98/38417
- DE-A- 19 612 616
- FR-A- 2 651 319
- FR-A- 2 733 833
- US-A- 5 007 279
- DATABASE WPI Section EI, Week 8626 Derwent Publications Ltd., London, GB; Class S02, AN 86-168235 XP002093453 & SU 1 193 492 A (YAROSL POLY), 23 novembre 1985 (1985-11-23)
- DATABASE WPI Section EI, Week 8933 Derwent Publications Ltd., London, GB; Class S02, AN 89-240587 XP002093454 & SU 1 460 639 A (TRACTOR ENGINE RES), 23 février 1989 (1989-02-23)
- DATABASE WPI Section EI, Week 8444 Derwent Publications Ltd., London, GB; Class S02, AN 84-274581 XP002093455 & SU 1 027 566 A (BRYANSK TRANSPORT), 7 juillet 1983 (1983-07-07)

## Description

La présente invention concerne un banc d'essai de fatigue thermique, notamment pour culasses en alliage léger (typiquement alliage d'aluminium) de moteurs à combustion, ainsi qu'un procédé d'essai de fatigue de telles culasses.

De nos jours, la mise au point d'une nouvelle culasse passe par des étapes de validation sur banc moteur. La durée typique d'un essai classique sur banc est de l'ordre de 800 heures.

Parallèlement, les constructeurs conçoivent de nos jours des moteurs, notamment des moteurs diesel, dont les culasses sont de plus en plus sollicitées, notamment de par la tolérance qu'elles doivent avoir à des démarrages et arrêts successifs, autant à froid qu'à chaud, et de par la puissance de plus en plus importante que doivent avoir les moteurs.

Ainsi les campagnes d'essais, devant simuler ces conditions de travail de la culasse, deviennent de plus en plus longues, alors qu'au contraire les constructeurs demandent aujourd'hui des temps de développement de culasses qui soient de plus en plus courts.

Il existe de nos jours certains bancs d'essai de fatigue thermique de culasses visant à réduire les durées d'essais en diminuant le recours à des essais sur banc moteur. Dans leur principe, ces bancs permettent de chauffer certaines zones de la culasse devant être exposées aux chambres de combustion du moteur, de manière à obtenir une simulation du comportement de la culasse face à des évolutions de température que l'on souhaite semblables à celles rencontrées en fonctionnement réel, mais sans avoir à la tester sur banc moteur.

On connaît ainsi différentes techniques utilisant par exemple des fluides caloporteurs (voir notamment FR-A-2 651 319) ou des gaz (voir notamment SU-A-1 193 492) pour chauffer certaines zones de la culasse en vue de réduire la durée des essais de fatigue thermique.

Selon une autre technique connue, dont la Demanderesse n'a toutefois pas connaissance d'une publication officielle, un banc d'essai est conçu pour chauffer localement une zone localisée de la culasse exposée à la combustion, et plus particulièrement les zones des pontets inter-sieges (entre les sièges de soupapes adjacents), de manière à atteindre en ces endroits des températures voisines des températures de fonctionnement du moteur. Les brûleurs utilisés sont des brûleurs tétréne-oxygène.

Ce type d'essai s'effectue toutefois avec une cartographie thermique sur l'ensemble de la culasse qui est très différente de celle rencontrée en fonctionnement réel, et les résultats obtenus ne sont donc pas suffisamment représentatifs. A l'usage, un tel banc permet de comparer efficacement des métallurgies différentes (alliages, finesses de grains,...) mais pas des géométries différentes (notamment 1a position du noyau d'eau, intervenant sur 1e refroidissement de 1a zone testée, et 1a géométrie générale de 1a culasse).

Un autre banc connu possède des brûleurs censés engendrer au niveau des zones de la culasse exposées à la combustion des températures sensiblement équivalentes à celles obtenues sur banc moteur. La régulation de ces températures s'effectue à l'aide d'un thermocouple par zone, qui détermine la température atteinte sur la culasse. Toutefois, ce procédé de régulation de la chauffe sur la température, par principe, ne permet pas de comparer des géométries de culasses différentes. En effet, si par exemple la position du noyau d'eau est modifiée de telle sorte que le refroidissement des surfaces chauffées soit amélioré, alors on a observé que la régulation par thermocouples amenait à augmenter la chauffe pour obtenir de nouveau les températures de consigne, ce qui n'était plus représentatif des conditions de fonctionnement réel du moteur.

Enfin un inconvénient de ce banc connu réside en ce qu'il n'est pas à même de bien respecter les écarts de températures entre certaines zones de la culasse et d'autres, ce qui peut affecter significativement la représentativité des résultats d'essais.

Enfin on connaît d'autres bancs dans lesquels le chauffage de la culasse est effectué par induction, au niveau des inserts des sièges de soupapes. On comprend que ce type de banc ne permet pas d'obtenir une carte thermique représentative de celle obtenue sur banc moteur.

Ainsi aucun des bancs d'essai de fatigue thermique connus ne permet d'accélérer le développement des culasses sans avoir à passer très régulièrement sur banc moteur. Plus particulièrement, si ces bancs connus permettent de valider correctement les solutions métallurgiques, seul le passage au banc moteur permet de tester efficacement les solutions géométriques, alors que précisément ce sont les solutions géométriques qui sont de nos jours les plus recherchées car ce sont elles qui permettent de faire les avancées les plus significatives en termes d'amélioration de la durée de vie des culasses.

La présente invention vise à pallier ces limitations de l'état de la technique, et à proposer un banc d'essai qui permette d'effectuer des essais accélérés de fatigue thermique de culasses en obtenant des résultats d'une très bonne représentativité (principalement détection de fissures de fatigue thermique dans la zone des pontets inter-sièges) en des durées sensiblement réduites par rapport aux solutions antérieures (typiquement en 40 à 200 heures contre 800 heures).

Un autre objet de la présente invention est de proposer un banc d'essai de fatigue thermique permettant d'obtenir une carte thermique des zones exposées aux chambres de combustion qui soit très voisine de celle obtenue sur banc moteur.

Un autre objet de l'invention est de pouvoir comparer des culasses ayant non seulement des métallurgies différentes, mais également des géométries différentes, notamment en termes de positionnement des' noyaux d'eau.

Ainsi la présente invention propose un banc d'essai de fatigue thermique pour culasse de moteur à combustion tel que défini dans la revendication 1.

Des aspects préférés, mais non limitatifs, du banc d'essai selon l'invention sont définis dans les revendications dépendantes 2 à 12.

Selon un deuxième aspect, l'invention propose un procédé recédé d'étalonnage d'un banc d'essai de fatigue thermique de culasses de moteurs à combustion tel que défini dans la revendication 13.

Des aspects préférés de ce procédé sont définis dans les revendications dépendantes 14 à 16.

Enfin l'invention propose un Procédé d'essai de fatigue thermique d'une culasse de moteur à combustion tel que défini dans la revendication 17.

Des aspects préférés de ce procédé sont définis dans les revendications 18 à 20.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est un schéma de principe, vu en élévation latérale, d'un banc d'essai de fatigue thermique selon l'invention,
la figure 2a est une vue de côté d'un brûleur utilisé dans le banc d'essai de la figure 1,
la figure 2b est une vue de face du brûleur de la figure 2a,
la figure 3a est une vue en coupe axiale du brûleur selon la ligne A-A de la figure 2b,
la figure 3b est une vue en coupe transversale selon la ligne B-B de la figure 3a,
la figure 4 est une vue en élévation de côté d'un capteur de flux thermique utilisé sur le banc et de son support,
la figure 5 est une vue en perspective du capteur de flux thermique et de son support,
la figure 6 est une vue de face schématique d'une zone de culasse exposée à une chambre de combustion, illustrant le comportement du banc en termes de carte thermique,
la figure 7 est un schéma-bloc de l'ensemble de l'installation du banc d'essai de fatigue,
la figure 8 est un graphique illustrant l'évolution du flux thermique apporté à chaque zone de chambre de la culasse au cours d'un cycle d'essai de fatigue, et
la figure 9 est un graphique illustrant l'évolution de la température en différents points de la culasse au cours d'un tel cycle d'essai de fatigue, pour une culasse donnée.

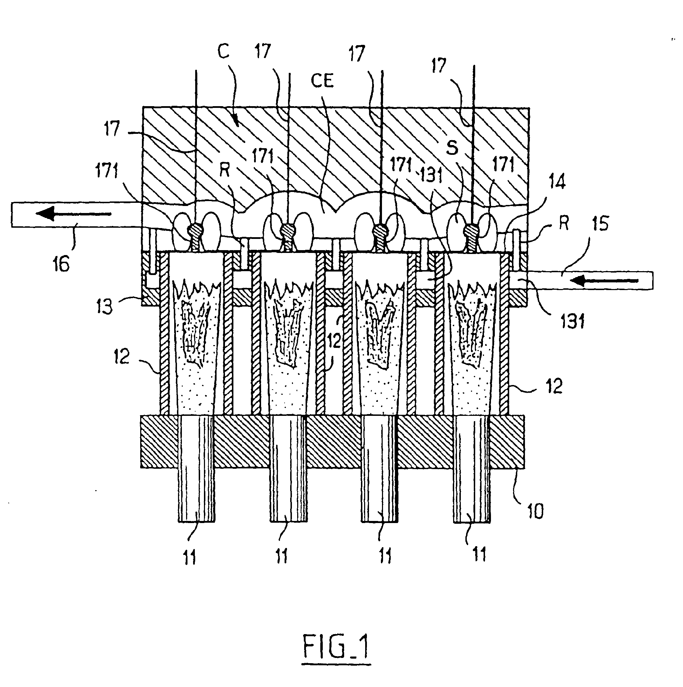

En référence tout d'abord à la figure 1, on a représenté un banc d'essai de fatigue thermique pour une culasse C. Ce banc comprend à sa base une plaque support 10 pour un ensemble de brûleurs 11 en nombre égal au nombre de cylindres du moteur pour lequel est conçue la culasse (en l'espèce quatre en ligne). Au-dessus de la plaque support 10 sont montées quatre chemises cylindriques 12 destinées à canaliser la chaleur émise par les brûleurs 11 vers le haut en direction de la culasse. Les chemises 12 rejoignent à leur extrémité supérieure une plaque d'interface 13 comportant un ensemble de passages traversants circulaires pour les chemises, et possédant une face supérieure plane contre laquelle est placée la culasse, avec interposition d'un joint de culasse conventionnel 14.

La culasse C possède de façon conventionnelle un conduit d'eau ou autre liquide de refroidissement CE qui passe au voisinage des sièges de soupapes. En outre, la plaque d'interface 13 possède dans son épaisseur un conduit d'eau de refroidissement 131. Ces conduits d'eau CE et 131 sont reliés l'un à l'autre de part et d'autre de chaque zone de tête de cylindre par des raccords R définis en partie par la construction de la culasse, et sont ainsi connectés ensemble à un conduit d'entrée d'eau 15 et à un conduit de sortie d'eau 16. Le banc est également équipé, de façon non représentée, d'un circuit d'eau ou autre liquide de refroidissement, comprenant un premier circuit de liquide froid et un second circuit, indépendant, de liquide chaud, ainsi que des moyens basés par exemple sur des électrovannes pour sélectivement coupler le banc au circuit chaud ou au circuit froid, comme on le verra en détail plus loin.

Il est par ailleurs prévu, de façon non représentée, des moyens pour piloter ou au moins contrôler ces circuits de manière à ce qu'ils appliquent à la culasse le liquide de refroidissement dans des conditions aussi voisines que possible de celles rencontrées lors du fonctionnement réel, en particulier en termes de débit, de vitesse, de température, de pression et de distribution (à savoir en particulier le respect des géométries et des sens de circulation au niveau de l'arrivée et du départ du liquide sur la culasse).

Comme on le verra en détail plus loin, on a monté dans la culasse, au niveau des passages de montage des injecteurs de carburant, un ensemble de capteurs de flux thermique (un par cylindre), les supports de ces capteurs étant désignés schématiquement par la référence 17 et les capteurs eux mêmes par la référence 171.

On a également représenté sur la figure 1 de façon schématique les sièges de soupapes S de la culasse C.

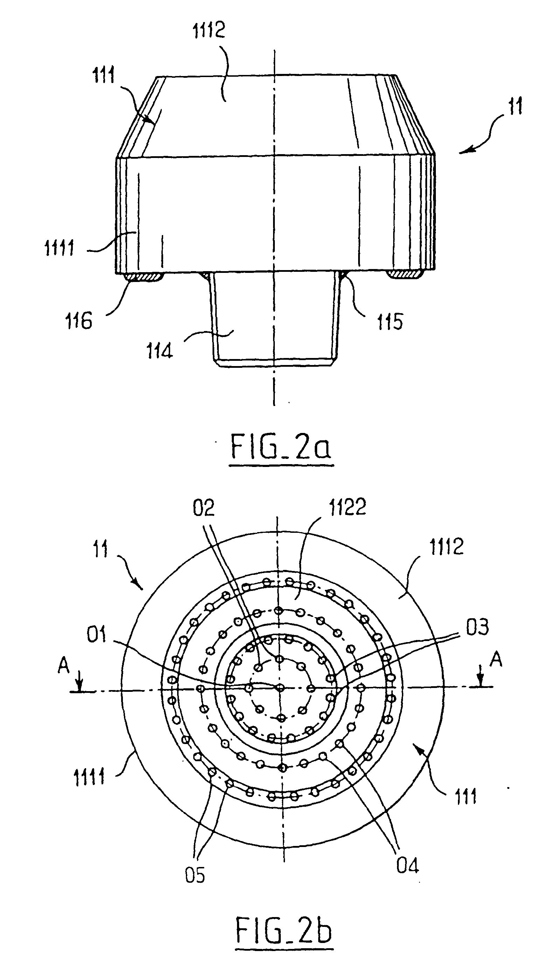

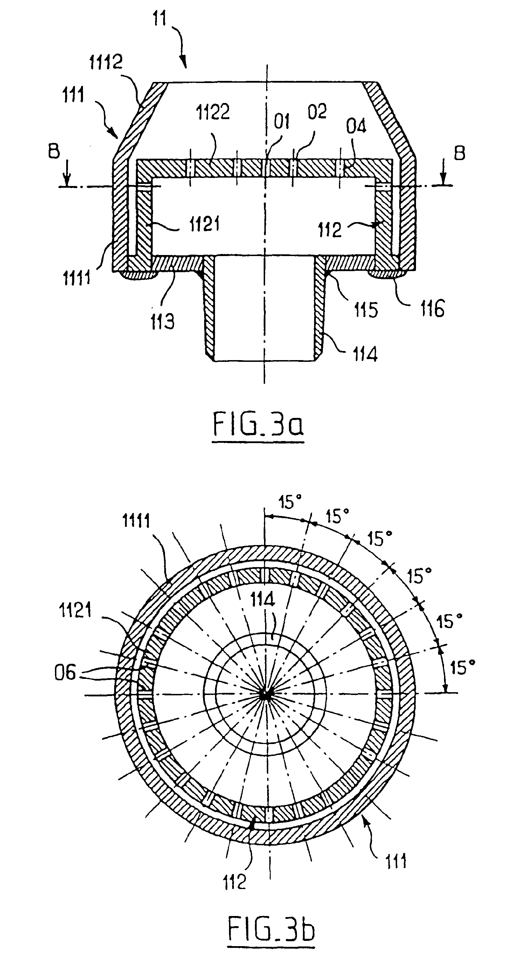

On va maintenant décrire en référence aux figures 2 et 3 les brûleurs utilisés pour apporter un flux thermique contrôlé aux zones de la culasse destinées à être exposées aux chambres de combustion du moteur (appelées ici zones de têtes de cylindres).

Tout d'abord sur un plan général, la Demanderesse a découvert qu'il était possible, au niveau d'une zone de tête de cylindre, d'atteindre les températures élevées requises pour bien simuler les conditions d'un fonctionnement réel en des durées permettant de réduire très significativement les durées de campagnes d'essai et donc les temps de développement, si l'on utilisait des brûleurs de géométrie particulière conjointement avec une alimentation en un mélange convenablement dosé d'un gaz d'hydrocarbure saturé, en particulier de gaz naturel, et d'air enrichi en oxygène, alors que les brûleurs de l'art antérieur ne permettaient généralement que de chauffer des régions très locales de la zone de tête de cylindre, ou que d'obtenir des durées de montée en température excessives et très préjudiciable quant la durée des campagnes d'essais.

Comme le montrent les figures 2a, 2b, 3a et 3b, chaque brûleur 11 est défini par assemblage d'un ensemble de pièces métalliques comprenant une cloche extérieure 111 possédant une partie de base cylindrique 1111 surmontée par une partie tronconique rentrante 1112 ouverte à son sommet, une pièce à orifices 112 possédant une paroi latérale cylindrique 1121 surmontée par une plaque circulaire 1122, une pièce de liaison 113 en forme de bague et une pièce formant raccord 114, cylindrique et d'un diamètre sensiblement plus petit que celui des pièces 111 et 112. Ces pièces sont assemblées par des cordons de soudure 115 et 116.

Dans la plaque circulaire 1122 sont formés une pluralité d'orifices axiaux O1 à 05 tandis que dans la paroi cylindrique associée 1121 est formée une série d'orifices radiaux 06. Ces orifices reçoivent le mélange gazeux sous pression appliqué au niveau du raccord 114, et leur nombre et leur répartition ont été ajustés de manière à obtenir, comme on le verra plus loin, une carte thermique de la culasse qui s'approche étroitement de celle rencontrée dans des conditions de fonctionnement réel.

Dans le présent exemple, on prévoit dans la plaque 1122 des orifices ayant tous un diamètre de 2 mm, et répartis sur des cercles concentriques, avec :
- un orifice central O1 ;
- huit orifices O2 répartis régulièrement sur un premier cercle d'un diamètre de 15 mm ;
- seize orifices O3 répartis régulièrement sur un second cercle d'un diamètre de 25 mm ;
- vingt-quatre orifices O4 répartis régulièrement sur un troisième cercle d'un diamètre de 40 mm ;
- trente-deux orifices O5 répartis régulièrement sur un quatrième cercle d'un diamètre de 55 mm.

La paroi latérale 1121 possède quant à elle vingt-quatre orifices 06 régulièrement espacés de 15°.

Les brûleurs sont alimentés par un mélange de gaz naturel (gaz de Lacq) et d'oxygène, en utilisant une vanne de mélange commandée comme on va le voir en détail plus loin de manière à faire varier à volonté le dosage entre gaz naturel et oxygène et donc la puissance de la flamme.

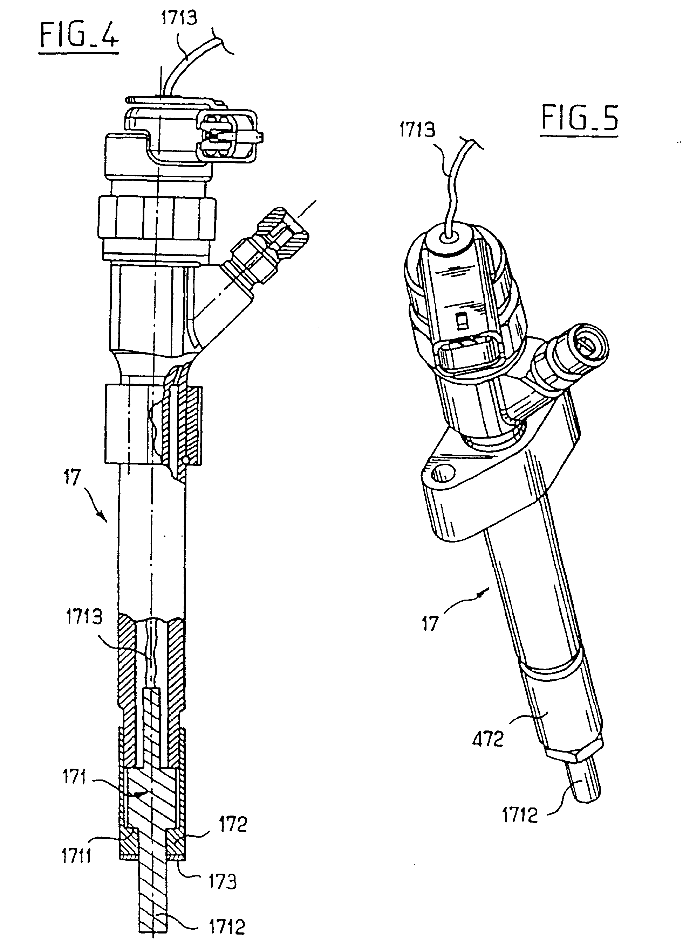

Maintenant en référence aux figures 4 et 5, on a représenté un injecteur conventionnel pour moteur diesel, globalement désigné par la référence 17 et qu'il n'est pas nécessaire de décrire en détail, dont l'extrémité côté chambre de combustion a été adaptée de manière à recevoir un capteur de flux thermique 171.

Ce capteur possède un épaulement 1711 contre lequel s'appuie une bague de fixation terminale 172 montée sur l'extrémité de l'injecteur, tandis qu'un joint en cuivre 173 est rapporté à l'extérieur de cette bague.

Le capteur proprement-dit est logé dans une partie cylindrique 1712 saillante vers l'extérieur à partir de l'injecteur, et destinée à se loger étroitement, avec un jeu extrêmement bien contrôlé, dans un alésage formé fans la culasse. Pour éviter les dérives, ce jeu est de préférence maintenu inférieur à 0,1 mm, et plus préférentiellement proche de 0,05 mm.

Le capteur 171 est relié à une centrale informatique de pilotage et d'acquisition (que l'on décrira plus loin) par l'intermédiaire d'un câble 1713 sous gaine en acier inoxydable.

Les capteurs de flux 171 sont avantageusement des capteurs à double jonction thermocouple fabriqués sous la référence CFTM par la société CRMT, 3, chemin de la Brocardière, 69570 DARDILLY, France, qui sont expressément conçus pour opérer dans des environnements particulièrement sévères.

Ainsi, comme on l'a déjà illustré schématiquement sur la figure 1, la culasse est équipée d'un capteur de flux par tête de cylindre, et le signal recueilli par ces capteurs va être utilisé pour le pilotage du banc comme on va le voir en détail dans la suite.

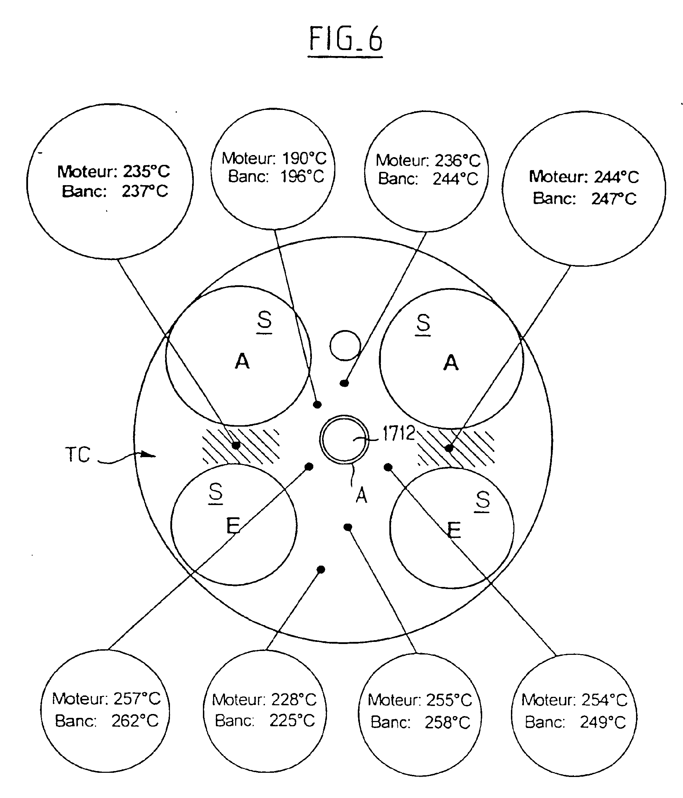

La figure 6 illustre une zone de tête de cylindre TC de la culasse, pourvue de quatre sièges de soupapes S (deux pour l'admission A et deux pour l'échappement E) et d'un alésage A pour l'injecteur, ae niveau duquel affleure l'extrémité libre de la partie terminale 1712 du capteur de flux thermique 171.

Cette figure indique, en différents points prédéterminés, d'une part les températures relevées dans des conditions de fonctionnement réel prédéterminées du moteur équipé de la culasse, et d'autre part les températures relevées lorsque la culasse est chauffée avec le banc tel que décrit ci-dessus.

Ces mesures ont été obtenues avec une culasse étalon ou culasse modèle que l'on a préalablement usinée et instrumentée à l'aide d'un ensemble de thermocouples agencés de façon affleurante aux points de mesure considérés.

On observe sur cette figure que les températures relevées sur banc moteur et sur le banc d'essai de la présente invention sont suffisamment voisines pour que l'on puisse considérer que le banc d'essai de l'invention offre une excellente modélisation des conditions de température réelles.

On notera ici que l'agencement des orifices de chaque brûleur, tel que décrit plus haut, a été élaboré pas à pas de manière à obtenir la carte thermique illustrée. En particulier, la position et le nombre des orifices du brûleur dans sa région centrale et dans sa région périphérique permettent de faire en sorte que les températures visées aux différents points de la figure 6 soient respectées avec une approximation satisfaisante.

Selon une variante de réalisation, non représentée, on peut jouer également sur le diamètre des orifices du brûleur.

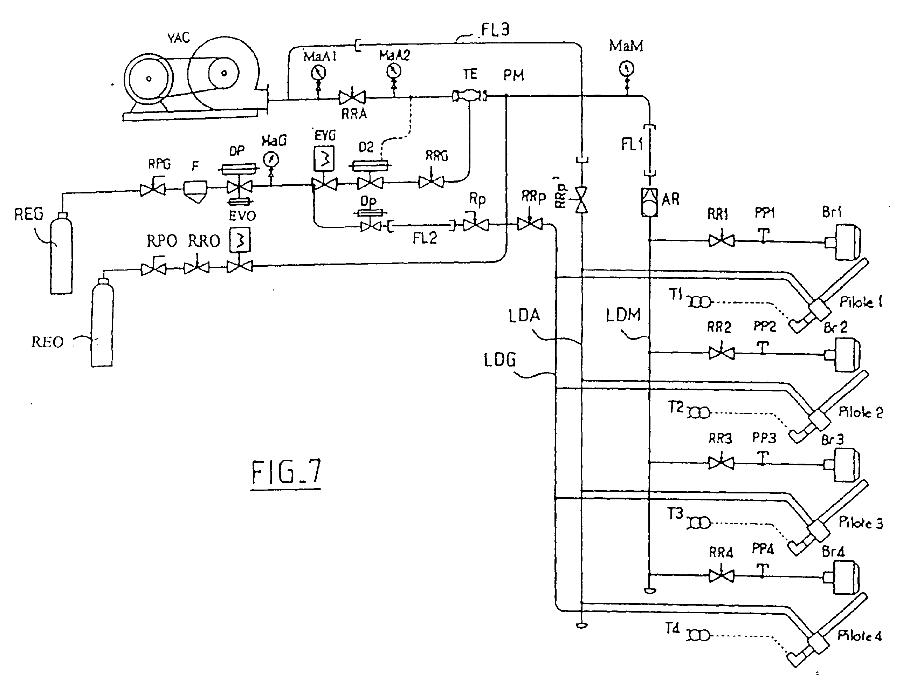

On va maintenant décrire les cycles de fonctionnement du banc d'essai de fatigue thermique selon l'invention, en faisant tout d'abord référence à la figure 7 qui est un schéma-bloc de l'agencement de mélange de gaz du banc, associé à une station de pilotage informatique SP.

De façon non illustrée, cette station SP reçoit des quatre capteurs de flux 171 via les conducteurs 1713, des signaux électriques (tensions) représentatifs des valeurs instantanées du flux thermique au niveau de chaque zone de tète de cylindre de la culasse à des fins de contrôle. En fonction de ces signaux, la station SP vérifie que la valeur du flux thermique mesurée au niveau de chaque brûleur est conforme à la valeur de consigne, c'est-à-dire présente par rapport à cette valeur de consigne un écart acceptable, par exemple de ±5 à ±10 %, et interrompt le processus en informant l'opérateur si l'écart devient anormal. Avantageusement, les débits respectifs par brûleur sont ajustables entre environ 0,35 et 1,15 m³/heure pour le gaz naturel et entre environ 1,25 et 5,25 m³/heure pour l'oxygène, la pression du gaz naturel étant de 4 bars et celle de l'oxygène de 3 bars.

En outre, la station SP est apte, de façon non illustrée, à contrôler la circulation de l'eau de refroidissement (ou autre liquide), en effectuant les commutations nécessaires sur le circuit de liquide chaud ou sur le circuit de liquide froid et en vérifiant si nécessaire que les conditions de débit, de vitesse, de température et de pression sont satisfaites.

La figure 7 illustre une unité VAC possédant un ventilateur de mise en pression délivrant de l'air sous pression et dont la sortie est reliée à une vanne de réglage de débit d'air RRA. La sortie de cette vanne est reliée à un té de mélange TE. Des manomètres MaA1 et MaA2 permettent de contrôler la pression d'air en amont et en aval de la vanne RRA.

On trouve également un réservoir de gaz naturel REG et un réservoir d'oxygène REO (bouteilles sous pression). Le réservoir REG est relié à une vanne quart-de-tour de réglage proportionnel RPG dont la sortie est reliée, via un filtre F, à un détendeur conventionnel DP. Un manomètre de gaz naturel MaG surveille en sortie la pression du gaz naturel. La sortie du détendeur DP est reliée à l'entrée d'une électrovanne tout-ou-rien de commande de gaz naturel EVG pouvant être commandée par la station de pilotage SP. La sortie de cette électrovanne est reliée à un autre détendeur D2 dont la sortie est reliée, via une vanne de réglage de débit de gaz naturel RRG, à l'autre entrée du té de mélange TE.

Le réservoir d'oxygène REO est relié à une vanne quart-de-tour de réglage proportionnel RPO dont 1a sortie est reliée à une électrovanne tout-ou-rien de commande d'oxygène EVO commandée également à partir de la station SP. La sortie de cette électrovanne est reliée directement en un point de mélange PM au conduit situé à la sortie du té de mélange TE, pour alimenter en parallèle quatre brûleurs Br1 à Br4.

La pression au point de mélange PM est vérifiée par un manomètre de mélange MaM, et le point de mélange est relié au banc par un flexible FL1 dont l'extrémité opposée est reliée, via un clapet anti-retour AR, à une ligne de distribution de mélange LDM qui est reliée aux quatre brûleurs Br1 à Br4 (cas d'une culasse pour moteur à quatre cylindres) via des vannes de réglage de débit respectives RR1 à RR4. Des prises de pression PP1 à PP4 permettent, au cours de l'étalonnage du banc ou lors de son contrôle, de vérifier la pression en entrée de chaque brûleur.

Le système comprend également, en association avec chaque brûleur, une veilleuse, ces veilleuses étant alimentées en parallèle de la façon suivante : une dérivation de gaz naturel est prise au niveau de l'entrée de l'électrovanne EVG et est reliée à une ligne de distribution de gaz pour veilleuses LDG via un détendeur Dp, un flexible FL2, une vanne de réglage proportionnel Rp et une vanne de réglage de débit RRp. Cette ligne de distribution alimente l'entrée gaz des veilleuses.

Par ailleurs, l'air est pris au niveau de la sortie du ventilateur de mise en pression VAC et appliqué via un flexible FL3 et une vanne de réglage de débit d'air RRp' à une ligne de distribution d'air pour veilleuses LDA qui alimente l'entrée d'air des veilleuses.

Aux veilleuses sont par ailleurs associés des transformateurs d'amorçage T1 à T4 permettant, au démarrage du banc et en cas d'extinction accidentelle des veilleuses, de réamorcer celles-ci par arc, de façon classique en soi.

Les différentes vannes de réglage proportionnel et de réglage de débit permettent, lors de l'étalonnage du banc tel qu'on va le décrire plus loin, de faire en sorte que les brûleurs reçoivent un mélange combustible dont la composition et la pression soient appropriées pour apporter aux zones concernées de la culasse les flux thermiques désirés, comme on l'a décrit plus haut. Selon une variante de réalisation, on peut prévoir d'alimenter chaque brûleur avec des électrovannes de réglage ou analogues permettant de régler plus finement le flux sur la valeur de consigne par rétroaction (cas notamment de dérives).

Pour effectuer un essai de culasse, la station de pilotage SP pilote simplement les deux électrovannes EVG et EVO pour provoquer lors de leur ouverture, au niveau de chaque brûleur, l'établissement de la flamme (phase de chauffe) et lors de leur fermeture, la suppression de la flamme (phase de refroidissement.

Pendant une phase de chauffage, la station de pilotage établit la flamme comme indiqué et commute en outre le banc sur le liquide de refroidissement chaud, ce liquide ayant été chauffé (autour de 100°) au cours de phases de chauffage précédentes.

Cette phase chaude s'effectue sur une durée permettant d'atteindre, en particulier dans les zones de pontets inter-sièges (zones hachurées sur la figure 6) les températures visées, telles qu'indiquées sur cette même figure 6, et les indications données plus haut quant aux brûleurs et à leur alimentation permettent d'atteindre ces températures au bout d'environ 20 à 100 secondes (typiquement autour de 40 secondes) à partir du début de la chauffe, ce qui est seulement une fraction des durées nécessaires avec les bancs de l'art antérieur. On notera ici que la circulation d'un liquide de refroidissement déjà chaud pendant cette phase participe à l'obtention des courtes durées précitées.

Au cours de cette phase de chauffe, selon une caractéristique essentielle de la présente invention, l'apport de chaleur par les brûleurs, ajusté par réglage du mélange gaz naturel/oxygène comme décrit plus haut, est déterminé non pas en surveillant les températures au niveau des têtes de cylindres, mais en surveillant simplement le flux thermique mesuré par les capteurs respectifs 171, c'est-à-dire la quantité de chaleur apportée par le brûleur considéré.

On règle à cet effet le mélange fourni aux brûleurs pour obtenir un flux thermique essentiellement constant et voisin d'une valeur de consigne donnée comme on l'a vu plus haut. Ce flux peut être choisi dans une gamme donnée, allant par exemple d'environ 250 kW/m2 à 1250 kW/m2, de manière à correspondre à différents types de moteurs et de puissances.

La phase de refroidissement consiste à fermer les électrovannes EVG et EVO est à commuter la culasse sur le circuit de refroidissement (par exemple l'eau du réseau, à une température typiquement de l'ordre de 15°), cette phase s'étendant sur une durée typiquement voisine de celle de la phase de chauffe.

Avantageusement, la valeur de consigne du flux pendant la phase de chauffe, qui est mémorisée dans la station, est établie par un processus d'étalonnage du banc qui consiste tout d'abord à placer sur banc moteur la culasse instrumentée décrite plus haut en référence à la figure 6, pourvue des capteurs de température, et en analysant les températures mesurées par les différents capteurs pour obtenir des cartes thermiques sous différentes conditions de fonctionnement (régimes moteur). Ensuite, la culasse instrumentée, démontée du banc moteur, est équipée des capteurs de flux thermique décrits plus haut et montée sur le banc d'essai de fatigue thermique, et la configuration des brûleurs ainsi que les caractéristiques du mélange combustible qu'ils reçoivent (composition et pression pour l'essentiel) est ajustée pas-à-pas pour que ces brûleurs conduisent à une stabilisation des températures relevées par les thermocouples de la culasse à des valeurs les plus voisines possibles des valeurs correspondant aux cartes thermiques relevées sur banc moteur (de préférence à plus ou moins 10°C).

On détermine ainsi un ensemble de valeurs de flux thermique simulant différentes conditions de fonctionnement du moteur, et la station de pilotage pourra, à la demande, ajuster l'alimentation des brûleurs pour obtenir aussi précisément que possible l'une quelconque de ces valeurs de flux.

Le banc d'essai de fatigue thermique est ainsi étalonné, et des culasses non instrumentées, pourvues seulement des capteurs de flux, vont pouvoir être testées au cours du processus de développement.

Il est important d'observer ici qu'en pilotant la chauffe dans le banc d'essai selon la présente invention sur la base du flux thermique et non pas des températures, on garantit une excellente modélisation du comportement réel sur banc moteur, et en particulier une évolution des températures se fera de façon voisine de celle constatée sur banc moteur.

Ainsi, si l'on essaye des culasses ayant des géométries différentes en particulier au niveau des conduits de liquide de refroidissement, ce qui influe sur l'évacuation de la chaleur à partir des têtes de cylindres, le banc de la présente invention permet d'assurer, contrairement à un pilotage par température, que ces changements quant à la qualité du refroidissement restituent bien les changements correspondants de température dans la culasse. Ainsi un progrès réalisé dans le refroidissement lors de la conception de la culasse, conduisant à un échauffement moindre en particulier dans les pontets inter-sièges, et donc à une fatigue thermique diminuée, sera tout à fait bien constaté dans le banc de la présente invention.

La phase froide est réalisée quant à elle en supprimant la flamme, de manière à ce qu'avec l'assistance du circuit de refroidissement, les zones de têtes de cylindres de la culasse voient leurs températures baisser jusqu'à environ 50°C au niveau des pontets inter-sièges, ce qui 1à encore, est obtenu en une durée d'environ 20 à 100 secondes (typiquement autour de 40 secondes).

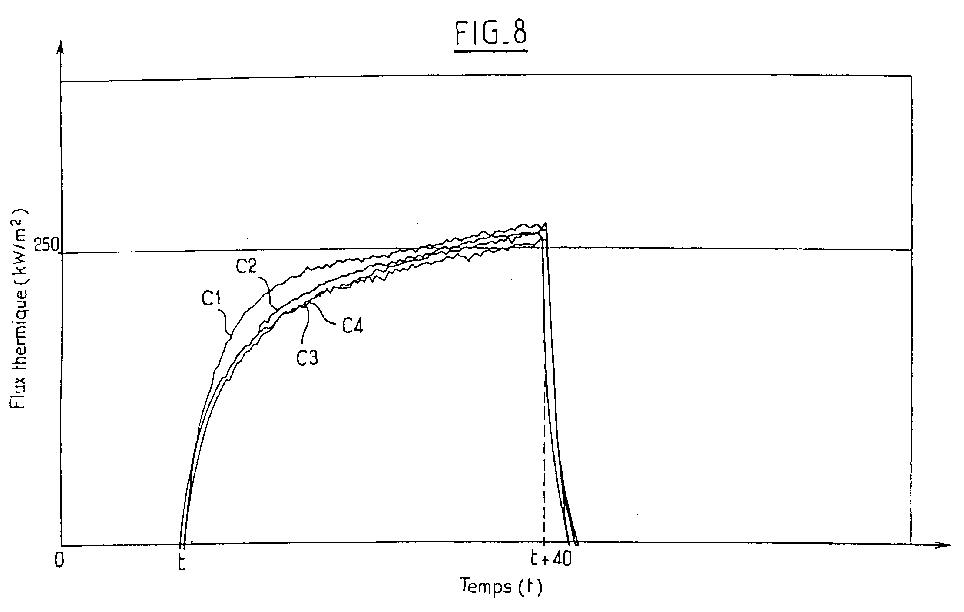

La figure 8 illustre par les courbes C1 à C4 le flux thermique mesuré au niveau de chaque tête de cylindre pour une phase de chauffe donnée. Les flux atteignent une donnée, reproduisant les conditions de fonctionnement réelles, et les flammes sont arrtées au bout d'une durée prédéterminée, ici d'environ 40 secondes. Cette évolution est avantageusement affichée sur écran par la station de pilotage pour permettre à l'opérateur de vérifier que le flux a bien atteint la valeur de consigne.

On observera ici que la durée de la phase de chauffe est déterminée au cours du processus d'étalonnage, et choisie de manière à permettre aux températures mesurées sur la culasse instrumentée d'atteindre les valeurs précédemment relevées sur banc moteur comme décrit plus haut.

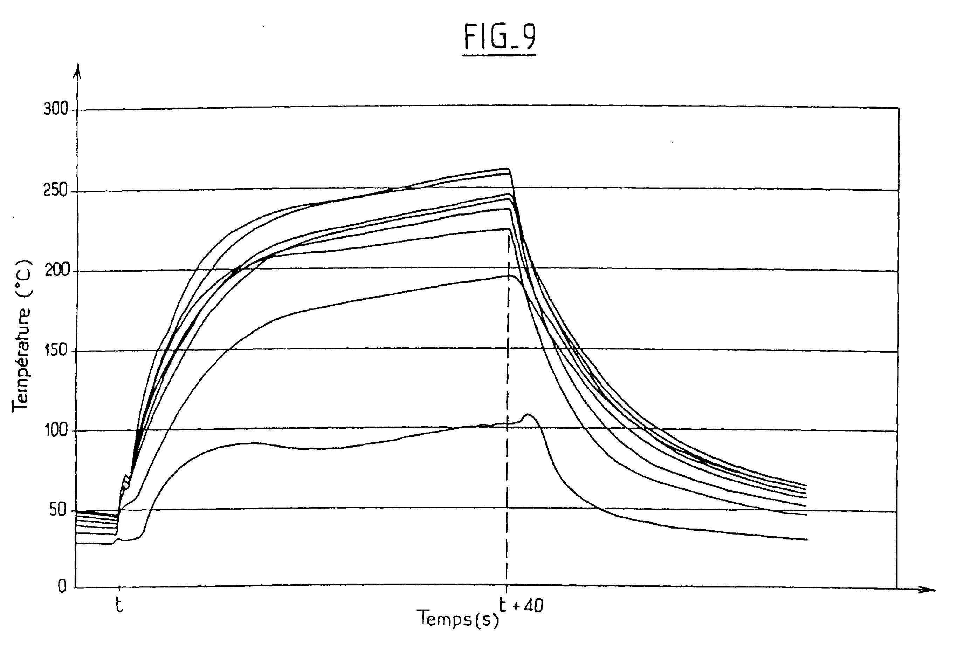

La figure 9 illustre l'évolution des températures, mesurées avec les différents thermocouples de la culasse instrumentée sur le banc d'essai de l'invention au cours de la phase d'étalonnage. On observe que grâce à l'ajustement des caractéristiques du brûleur, ces évolutions étant différentes d'un point à l'autre, pour respecter la carte thermique recherchée.

## Revendications

1. Banc d'essai de fatigue thermique pour culasse de moteur à combustion, comprenant un support (14) pour une culasse (C) possédant au moins une zone de tête de cylindre apte à être normalement exposée à la combustion du moteur, et au moins un brûleur (11) apte à diriger sur l'ensemble de ladite zone une flamme, **caractérisé en ce qu'**il comprend en outre au moins un capteur de flux thermique (171) situé dans l'épaisseur de ladite culasse au niveau de ladite zone pour vérifier que le flux thermique produit par la flamme est au moins approximativement conforme à une valeur prédéterminée.

2. Banc d'essai selon la revendication 1, **caractérisé en ce qu'**il comprend en outre un circuit de liquide de refroidissement chaud et un circuit de liquide de refroidissement froid, et des moyens pour sélectivement relier la culasse à l'un des deux circuits.

3. Banc d'essai selon la revendication 2, **caractérisé en ce que** les circuits de refroidissement sont pilotés de manière à reproduire au moins approximativement les conditions réelles de circulation de fluide de refroidissement.

4. Banc d'essai selon l'une des revendications 1 à 3, **caractérisé en ce que** chaque brûleur (11) est alimenté par un mélange de gaz d'hydrocarbure saturé et d'air enrichi en oxygène.

5. Banc d'essai selon la revendication 4, **caractérisé en ce que** le gaz d'hydrocarbure saturé est du gaz naturel.

6. Banc d'essai selon l'une des revendications 4 et 5, **caractérisé en ce qu'**il comprend en outre des moyens pour ajuster le flux thermique fourni par les brûleurs en réglant les quantités de gaz et d'air enrichi en oxygène dans le mélange.

7. Banc d'essai selon l'une des revendications 1 à 6, **caractérisé en ce que** le flux de chaque brûleur est ajusté sur une valeur de consigne respective.

8. Banc d'essai selon la revendication 7, **caractérisé en ce que** ladite valeur de consigne est choisie de manière à engendrer en différents points de la culasse une carte thermique voisine de celle obtenue, et mesurée sur une culasse équipée de capteurs de température, dans des conditions réelles de fonctionnement.

9. Banc d'essai selon la revendication 8, **caractérisé en ce que** chaque brûleur (11) est apte à engendrer une flamme distribuée capable de produire au niveau de la zone de tête de cylindre associée ladite carte thermique.

10. Banc d'essai selon la revendication 9, **caractérisé en ce que** chaque brûleur possède une plaque (112) percée avec une répartition prédéterminée d'orifices.

11. Banc d'essai selon la revendication 10, **caractérisé en ce que** ladite répartition est non homogène.

12. Banc d'essai selon l'une des revendications 1 à 11, **caractérisé en ce que** chaque capteur de flux thermique (171) est monté sur l'extrémité d'un injecteur de carburant (17) apte à être monté dans la culasse, ladite extrémité étant adaptée pour recevoir ledit capteur.

13. Procédé d'étalonnage d'un banc d'essai de fatigue thermique de culasses de moteurs à combustion selon l'une des revendications 1 à 12, équipé d'une pluralité de brûleurs (11), **caractérisé en ce qu'**il comprend les étapes suivantes :
- on prévoit au voisinage d'au moins une zone d'une culasse instrumentée (C), destinée à être exposée à la combustion du moteur, un ensemble de capteurs de température,
- pendant que la culasse est en opération sur banc moteur, on détermine à l'aide des capteurs de température une carte thermique de ladite zone en régime stabilisé,
- on mémorise ladite carte thermique,
- on monte dans ladite zone de la culasse instrumentée un capteur de flux thermique,
- on place la culasse instrumentée sur le banc d'essai, et
- on ajuste le flux thermique apporté par chaque brûleur (11) pour recréer au moins approximativement ladite carte thermique mémorisée, et
- on mémorise la valeur mesurée du flux thermique après ajustement en tant que valeur de consigne.

14. Procédé selon la revendication 13, **caractérisé en ce qu'**on prévoit au moins un capteur de flux thermique (171) par zone de tête de cylindre, **en ce qu'**on mémorise une valeur de consigne par couple bruleur/capteur.

15. Procédé selon l'une des revendications 13 et 14, **caractérisé en ce que**, pendant que la culasse est sur banc d'essai de fatigue thermique, on détermine la durée nécessaire à la stabilisation de la carte thermique mesurée.

16. Procédé selon l'une des revendications 13 à 15, **caractérisé en ce que** l'étape d'ajustement du flux thermique comprend une étape d'ajustement de la géométrie du brûleur et une étape d'ajustement du mélange combustible fourni au brûleur.

17. Procédé d'essai de fatigue thermique d'une culasse de moteur à combustion, **caractérisé en ce qu'**il comprend les étapes suivantes :
- on prévoit un banc d'essai de fatigue thermique selon l'une des revendications 1 à 12 étalonné selon le procédé de l'une des revendications 13 à 16,
- on place la culasse sur ledit banc d'essai, et
- on alterne des phases de chauffe avec un flux thermique réglé sur la ou lesdites valeurs de consigne et des phases de refroidissement, avec des durées prédéterminées.

18. Procédé selon la revendication 17, **caractérisé en ce que** le flux thermique pouvant être apporté par chaque brûleur (11) est supérieur à environ 250 kW/m2.

19. Procédé selon la revendication 18, **caractérisé en ce que** la durée des phases de chauffe et de refroidissement est comprise entre environ 20 et 100 secondes.

20. Procédé selon l'une des revendications 17 à 19, **caractérisé en ce qu'**il comprend en outre les étapes consistant à :
- relier la culasse à un circuit de liquide de refroidissement chaud pendant les phases de chauffe, et
- relier la culasse à un circuit de liquide de refroidissement froid pendant les phases de refroidissement.

## Patentansprüche

1. Prüfstand zum Prüfen der thermischen Ermüdung für Zylinderköpfe eines Verbrennungsmotors, der folgendes umfaßt: einen Träger (14) für einen Zylinderkopf (C), der wenigstens eine Zylinderkopfzone aufweist, die dafür eingerichtet ist, normalerweise der Verbrennung des Motors ausgesetzt zu werden, und wenigstens einen Brenner (11), der dafür eingerichtet ist, auf die gesamte Zone eine Flamme zu richten, **dadurch gekennzeichnet, daß** er außerdem wenigstens einen Sensor für den thermischen Fluß (171) umfaßt, der in der Dicke des Zylinderkopfs im Bereich der genannten Zone angeordnet ist, um zu überprüfen, daß der von der Flamme erzeugte thermische Fluß wenigstens ungefähr einem vorbestimmten Wert entspricht.

2. Prüfstand nach Anspruch 1, **dadurch gekennzeichnet, daß** er außerdem einen Kreislauf mit warmer Kühlflüssigkeit und einen Kreislauf mit kalter Kühlflüssigkeit umfaßt, sowie Mittel, um den Zylinderkopf wahlweise mit einem der beiden Kreisläufe zu verbinden.

3. Prüfstand nach Anspruch 2, **dadurch gekennzeichnet, daß** die Kühlkreisläufe so gesteuert werden, daß wenigstens ungefähr die realen Fließbedingungen der Kühlflüssigkeit reproduziert werden.

4. Prüfstand nach einem der Ansprüche 1 bis 3, **dadurch gekennzeichnet, daß** jeder Brenner (11) durch eine Mischung aus gesättigtem Kohlenwasserstoffgas und mit Sauerstoff angereicherter Luft versorgt wird.

5. Prüfstand nach Anspruch 4, **dadurch gekennzeichnet, daß** das gesättigte Kohlenwasserstoffgas Erdgas ist.

6. Prüfstand nach einem der Ansprüche 4 und 5, **dadurch gekennzeichnet, daß** er außerdem Mittel umfaßt, um den von den Brennern bereitgestellten thermischen Fluß einzustellen, indem die Mengen an Gas und mit Sauerstoff angereicherter Luft in der Mischung gesteuert werden.

7. Prüfstand nach einem der Ansprüche 1 bis 6, **dadurch gekennzeichnet, daß** der Fluß jedes Brenners auf einen jeweiligen Sollwert eingestellt wird.

8. Prüfstand nach Anspruch 7, **dadurch gekennzeichnet, daß** der Sollwert so gewählt ist, daß an verschiedenen Punkten des Zylinderkopfs eine thermische Karte erzeugt wird, die nahe an derjenigen liegt, die für einen mit Temperaturfühlern ausgerüsteten Zylinderkopf unter realen Betriebsbedingungen erhalten und gemessen wird.

9. Prüfstand nach Anspruch 8, **dadurch gekennzeichnet, daß** jeder Brenner (11) dafür eingerichtet ist, eine verteilte Flamme zu erzeugen, die dazu fähig ist, im Bereich der zugehörigen Zylinderkopfbereichzone die thermische Karte herbeizuführen.

10. Prüfstand nach Anspruch 9, **dadurch gekennzeichnet, daß** jeder Brenner eine Platte (112) umfaßt, die mit einer vorbestimmten Verteilung von Öffnungen durchlöchert ist.

11. Prüfstand nach Anspruch 10, **dadurch gekennzeichnet, daß** die Verteilung nicht homogen ist.

12. Prüfstand nach einem der Ansprüche 1 bis 11, **dadurch gekennzeichnet, daß** jeder Sensor für den thermischen Fluß (171) am Ende einer Treibstoffeinspritzdüse (17) angebracht ist, die dafür eingerichtet ist, im Zylinderkopf montiert zu werden, wobei das Ende dafür eingerichtet ist, den Sensor aufzunehmen.

13. Verfahren zur Eichung eines Prüfstands zum Prüfen der thermischen Ermüdung von Zylinderköpfen eines Verbrennungsmotors nach einem der Ansprüche 1 bis 12, der mit mehreren Brennern (11) ausgerüstet ist, **dadurch gekennzeichnet, daß** es die folgenden Schritte umfaßt:
- in der Umgebung wenigstens einer Zone eines mit Instrumenten versehenen Zylinderkopfs (C), die dafür vorgesehen ist, der Verbrennung des Motors ausgesetzt zu werden, ist eine Gruppe von Temperaturfühlern vorgesehen,
- während der Zylinderkopf auf einer Motorbank in Betrieb ist, wird mittels der Temperaturfühler eine thermische Karte der Zone im stabilisierten Betrieb bestimmt,
- die thermische Karte wird gespeichert,
- in der Zone des mit Instrumenten versehenen Zylinderkopfs wird ein Sensor für den thermischen Fluß angebracht,
- der mit Instrumenten versehene Zylinderkopf wird auf den Prüfstand gebracht, und
- der von jedem Brenner (11) bereitgestellte thermische Fluß wird eingestellt, um wenigstens in etwa die gespeicherte thermische Karte zu reproduzieren, und
- der gemessene Wert des thermischen Flusses nach der Einstellung wird als Sollwert gespeichert.

14. Verfahren nach Anspruch 13, **dadurch gekennzeichnet, daß** pro Zylinderkopfbereichzone wenigstens ein Sensor für den thermischen Fluß (171) vorgesehen ist und **dadurch**, daß pro Brenner/Sensor-Paar ein Sollwert gespeichert wird.

15. Verfahren nach einem der Ansprüche 13 und 14, **dadurch gekennzeichnet, daß** während der Zylinderkopf auf dem Prüfstand für die thermische Ermüdung ist, die notwendige Dauer zur Stabilisierung der gemessenen thermischen Karte bestimmt wird.

16. Verfahren nach einem der Ansprüche 13 bis 15, **dadurch gekennzeichnet, daß** der Schritt der Einstellung des thermischen Flusses einen Schritt zur Einstellung der Brennergeometrie und einen Schritt zur Einstellung der an den Brenner gelieferten brennbaren Mischung umfaßt.

17. Prüfverfahren zum Prüfen der thermischen Ermüdung eines Zylinderkopfs eines Verbrennungsmotors, **dadurch gekennzeichnet, daß** es die folgenden Schritte umfaßt:
- es wird ein Prüfstand zum Prüfen der thermischen Ermüdung nach einem der Ansprüche 1 bis 12 vorgesehen, der gemäß dem Verfahren nach einem der Ansprüche 13 bis 16 geeicht wird,
- der Zylinderkopf wird auf den Prüfstand gebracht, und
- Erwärmungsphasen mit einem thermischen Fluß, der auf den oder die Sollwerte eingestellt ist, werden mit vorbestimmten Zeitdauern mit Abkühlungsphasen abgewechselt.

18. Verfahren nach Anspruch 17, **dadurch gekennzeichnet, daß** der thermische Fluß, der von jedem Brenner (11) bereitgestellt werden kann, größer als etwa 250 kW/m2 ist.

19. Verfahren nach Anspruch 18, **dadurch gekennzeichnet, daß** die Dauer der Erwärmungs- und Abkühlungsphasen zwischen etwa 20 und 100 Sekunden liegt.

20. Verfahren nach einem der Ansprüche 17 bis 19, **dadurch gekennzeichnet, daß** es außerdem die Schritte umfaßt, die aus folgendem bestehen:
- Verbinden des Zylinderkopfs mit einem Kreislauf warmer Kühlflüssigkeit während der Erwärmungsphasen, und
- Verbinden des Zylinderkopfs mit einem Kreislauf kalter Kühlflüssigkeit während der Abkühlungsphasen.

## Claims

1. A thermal fatigue test bed for an internal combustion engine cylinder head, the test bed comprising: a support (14) for a cylinder head (C) possessing at least one cylinder top zone suitable for being normally exposed to combustion in an engine; and at least one burner (11) suitable for directing a flame onto said zone as a whole; the test bed being **characterized in that** it further comprises at least one heat flux sensor (171) situated in the thickness of said cylinder head in said zone to verify that the heat flux produced by the flame complies at least approximately with a predetermined value.

2. A test bed according to claim 1, **characterized in that** it further comprises a hot cooling liquid circuit and a cold cooling liquid circuit, and means for selectively connecting the cylinder head to one of the two circuits.

3. A test bed according to claim 3, **characterized in that** the cooling circuits are controlled so as to reproduce at least approximately real conditions of cooling fluid circulation.

4. A test bed according to any one of claims 1 to 4, **characterized in that** each burner (11) is fed with a mixture of saturated hydrocarbon gas and oxygen-enriched air.

5. A test bed according to claim 4, **characterized in that** the saturated hydrocarbon gas is natural gas.

6. A test bed according to claim 4 or 5, **characterized in that** it further comprises means for adjusting the heat flux supplied by the burners by adjusting the quantities of gas and of oxygen-enriched air in the mixture.

7. A test bed according to any one of claims 1 to 6, **characterized in that** the flux from each burner is adjusted on a respective reference value.

8. A test bed according to claim 7, **characterized in that** said reference value is selected in such a manner as to generate a temperature map at various points of the cylinder head similar to that obtained under real operating conditions and as measured by means of a cylinder head fitted with temperature sensors.

9. A test bed according to claim 8, **characterized in that** each burner (11) is suitable for generating a distributed flame capable of producing said temperature map in the associated cylinder top zone.

10. A test bed according to claim 9, **characterized in that** each burner possesses a perforated plate (112) having a predetermined distribution of orifices.

11. A test bed according to claim 10, **characterized in that** said distribution is non-uniform.

12. A test bed according to any one of claims 1 to 11, **characterized in that** each heat flux sensor (171) is mounted at the end of a fuel injector (17) suitable for mounting in the cylinder head, said end being adapted to receive said sensor.

13. A method of calibrating a thermal fatigue test bed for internal combustion engine cylinder heads according to any one of claims 1 to 12, fitted with a plurality of burners (11), the method being **characterized in that** it comprises the following steps:
providing a set of temperature sensors in a cylinder head (C) fitted with instruments, said sensors being in the vicinity of at least one zone that is to be exposed to engine combustion;
· using the temperature sensors while the cylinder head is in operation on an engine test bed to determine a temperature map for said zone under steady conditions;
· storing said temperature map;
· mounting a heat flux sensor in said zone of the cylinder head fitted with instruments;
· placing the cylinder head fitted with instruments on the test bed;
· adjusting the heat flux delivered by each burner (11) to recreate at least approximately said stored temperature map; and
· storing the heat flux value measured after adjustment as a reference value.

14. A method according to claim 13, **characterized in that** at least one heat flux sensor (171) is provided per cylinder top zone, and a reference value is stored for each burner/sensor pair.

15. A method according to claim 13 or 14, **characterized in that**, while the cylinder head is on the thermal fatigue test bed, the time required for the measured temperature map to stabilize is determined.

16. A method according to any one of claims 13 to 15, **characterized in that** the step of adjusting the heat flux comprises a step of adjusting the shape of the burner and a step of adjusting the fuel mixture supplied to the burner.

17. A method of testing thermal fatigue of an internal combustion engine cylinder head, the method being **characterized in that** it comprises the following steps:
· providing a thermal fatigue test bed according to any one of claims 1 to 12, calibrated by the method of any one of claims 13 to 16;
· placing the cylinder head on said test bed; and
· alternating heating stages with heat flux adjusted on said reference value(s) and cooling stages, of predetermined durations.

18. A method according to claim 17, **characterized in that** the heat flux that can be delivered by each burner (11) is greater than about 250 kW/m².

19. A method according to claim 18, **characterized in that** the duration of the heating stages and of the cooling stages lies in the range about 20 s to about 100 s.

20. A method according to any one of claims 17 to 19, **characterized in that** it further comprises the steps consisting in:
· connecting the cylinder head to a hot cooling liquid circuit during the heating stages; and
· connecting the cylinder head to a cold cooling liquid circuit during the cooling stages.
